# EUROPÄISCHE PATENTSCHRIFT

(11) **EP 1 875 579 B1**
(45) Veröffentlichungstag und Bekanntmachung des Hinweises auf die Patenterteilung: **18.09.2013**
(21) Anmeldenummer: 06722481.6
(22) Anmeldetag: 14.02.2006
(51) Int. Cl.: H02H 7/085, B60J 7/057

(54) **VERFAHREN UND VORRICHTUNG ZUM SCHLIESSEN EINER EINKLEMMÜBERWACHTEN FAHRZEUGÖFFNUNG**
METHOD AND DEVICE FOR CLOSING A VEHICLE OPENING WITH PINCH-PROTECTION MONITORING
PROCEDE ET DISPOSITIF POUR FERMER UNE OUVERTURE DE VEHICULE A CONTROLE ANTIPINCEMENT

(30) Priorität: 15.02.2005 DE 102005006900
(43) Veröffentlichungstag der Anmeldung: 09.01.2008
(73) Patentinhaber: Webasto AG, 82131 Stockdorf (DE)
(72) Erfinder: APPEL, Josef, 82131 Gauting (DE); MORAWIETZ, Günter, CH-8610 Uster (CH); KLESING, Joachim, 82223 Eichenau (DE)
(86) Internationale Anmeldenummer: PCT/DE2006/000259
(87) Internationale Veröffentlichungsnummer: WO 2006/086957

(56) Entgegenhaltungen:
- EP-A- 0 903 459
- FR-A- 2 806 438
- US-B1- 6 335 602

## Beschreibung

Die Erfindung betrifft ein Verfahren und eine Vorrichtung zum Schließen einer einklemmüberwachten Fahrzeugöffnung mittels eines Fahrzeugelements, das von einem Antriebssystem angetrieben wird, das mit einem Einklemmschutzsystem in Wirkverbindung steht, welches im Einklemmfall mit einem Reversieren des Fahrzeugelements in Öffnungsrichtung reagiert.

Verfahren und Vorrichtungen dieser Art sind in verschiedenen Ausgestaltungen bekannt. Unter anderem können Informationen, die ein mögliches Einklemmen erkennen lassen, aus Betriebsdaten des Antriebssystems entnommen werden, beispielsweise bei elektrischen Antrieben durch Überwachung des Motorstromes oder des vom Motor abgegebenen Drehmomentes, die beide im Einklemmfall, aber auch bei erhöhter Schwergängigkeit ansteigen. Ferner kann über eine Auswertung der Motorumdrehungen und/oder der Drehzahl eine Beschleunigungs- und/oder Geschwindigkeitsinformation zur Hinderniserkennung genutzt werden (DE 34 33 204 A1). Bei Über- oder Unterschreiten bestimmter Schwellwerte der jeweils erfassten Parameter wird die Bewegungsrichtung umgekehrt.

Schwergängigkeit ist insbesondere auf Reibungsverluste des Schließsystems an Führungsvorrichtungen und Dichtungen für das verstellbare Fahrzeugelement zurückzuführen. Solche Reibungsverluste sind stark abhängig von äußeren Faktoren wie Außentemperatur, Schmierungszustand oder Verschmutzungsgrad. Daher können die überwachten Parameter in unkontrollierter Weise stark variieren, und es kann zu Fehlauslösungen des Einklemmschutzsystems kommen. Letztere können es unmöglich machen, das Fahrzeugelement in seine Schließstellung zu bringen. Daher hat man in der Praxis besondere Bedienfolgen oder Bedienelemente vorgesehen, die eine Notschließung ermöglichen sollen. Beispielsweise hat man dafür gesorgt, dass mit jedem Schließversuch die Schließkraft erhöht wird, wie aus EP 0 903 459 bekannt ist.

Zusätzliche Bedienelemente für Notschließungen führen zu unerwünschten Mehrkosten. Notschließbedienfolgen können meist nicht intuitiv gefunden werden. Im Notfall ist der Benutzer daher gegebenenfalls nicht in der Lage, das betreffende Fahrzeugelement, zum Beispiel ein Schiebedach, zu schließen. Bei schrittweiser Erhöhung der Schließkraft können ferner nach mehreren Schließversuchen gefährlich hohe Klemmkräfte erreicht werden. Gleichwohl wird die Schwergängigkeit oft nicht sicher oder erst nach mehreren Versuchen überwunden.

Aufgabe der Erfindung ist es daher, ein Verfahren und eine Vorrichtung zum Schließen einer einklemmüberwachten Fahrzeugöffnüng zu schaffen, die es dem Benutzer erlauben, mit der gewohnten Bedienung Schwergängigkeitsstellen sicher zu überwinden, ohne dass dabei der Fertigungs- und/oder Montageaufwand nennenswert gesteigert werden müssen.

Diese Aufgabe wird bei einem Verfahren zum Schließen einer einklemmüberwachten Fahrzeugöffnung mittels eines Fahrzeugelements, das von einem Antriebssystem angetrieben wird, das mit einem Einklemmschutzsystem in Wirkverbindung steht, welches im Einklemmfall mit einem Reversieren des Fahrzeugelements in Öffnungsrichtung reagiert, erfindungsgemäß dadurch gelöst, dass bei einer Schließbewegung des Fahrzeugelements das Einklemmschutzsystem mindestens nach einem vorausgegangenen Reversieren derart verzögert eingeschaltet wird, dass ein Schließvorgang über einen vorgegebenen kleinen Einklemmschutzverzögerungs-Fahrweg s_{EKS-Verzögerung} des Fahrzeugelements hinweg ohne Einklemmschutz erfolgt.

Eine Vorrichtung zum Schließen einer einklemmüberwachten Fahrzeugöffnung mittels eines Fahrzeugelements, mit einem das Fahrzeugelement antreibenden Antriebssystem und einem damit in Wirkverbindung stehenden Einklemmschutzsystem, das im Einklemmfall mit einem Reversieren des Fahrzeugelements in Öffnungsrichtung reagiert, erfindungsgemäß gekennzeichnet durch eine Steuerung, die bei einer Schließbewegung des Fahrzeugelements das Einklemmschutzsystem mindestens nach einem vorausgegangenen Reversieren derart verzögert einschaltet, dass ein Schließvorgang über einen vorgegebenen kleinen Einklemmschutzverzögerungs-Fahrweg s_{EKS-Verzögerung} des Fahrzeugelements hinweg ohne Einklemmschutz erfolgt.

Unter dem Begriff "klein" für den Einklemmschutzverzögerungs-Fahrweg soll im Rahmen der Erfindung verstanden werden, dass nachgiebige Klemmkörper, wie insbesondere Körperteile von Fahrzeuginsassen, auch dann noch hinreichend geschützt sind, wenn sich nach einem Ansprechen des Einklemmschutzsystems das überwachte Fahrzeugelement um den Einklemmschutzverzögerungs-Fahrweg in Schließrichtung weiterbewegt, bevor ein Reversieren erfolgt. Für praktische Zwecke kann der Einklemmschutzverzögerungs-Fahrweg S_{EKS-Verzögerung} in der Größenordnung von 5 bis 50 mm, insbesondere bei etwa 20 mm liegen.

Durch normales, erforderlichenfalls mehrmaliges Betätigen des Antriebssystems in Schließrichtung lassen sich Schwergängigkeitsstellen einfach überfahren, weil das Einklemmschutzsystem an einem sofortigen Ansprechen gewollt gehindert ist.

Bevorzugte Ausgestaltungen der Erfindung ergeben sich aus den Unteransprüchen.

Die Auslegung kann so getroffen sein, dass das Einklemmschutzsystem grundsätzlich, das heißt unabhängig von vorhergehenden Ereignissen, verzögert aktiviert wird. Zur Maximierung der Schutzfunktion ist vorzugsweise aber dafür gesorgt, dass das Einklemmschutzsystem normalerweise unverzögert wirksam gemacht wird und ein verzögertes Einschalten des Einklemmschutzsystems nur nach vorausgegangenem Reversieren des Fahrzeugelements erfolgt.

In weiterer Ausgestaltung der Erfindung wird ferner - mindestens nach einem vorausgegangenen Ansprechen des Einklemmschutzsystems und einer dadurch ausgelösten Reversierbewegung des Fahrzeugelements in eine festgelegte Freigabeposition oder um eine festgelegte Reversierstrecke - bei (erneutem) Aktivieren des Antriebssystems in Schließrichtung die von dem Einklemmschutzsystem bestimmte Reversierbewegung auf eine vorgegebene kleine Reversierstrecke s_{Rev} eingestellt, die kleiner als der vorgegebene Einklemmschutzverzögerungs-Fahrweg s_{EKS-Verzögerung} ist. Diese Reversierstrecke s_{Rev} wird so gewählt, dass im Einklemmfall eine Freigabe des geklemmten Körpers in der Regel noch möglich ist, obwohl unter Umständen zur Freigabe auch eine weitere Öffnungsbewegung durch bewusste Bedienung notwendig werden kann. In der Praxis kann die Reversierstrecke s_{Rev} in der Größenordnung von 5 bis 40 mm, insbesondere bei etwa 10 mm liegen.

Die Auslegung kann so getroffen sein, dass bei einem Wirksamwerden des Einklemmschutzsystems eine erste Reversierbewegung über eine größere als die vorstehend genannte Reversierstrecke s_{Rev} oder in eine zuvor festgelegte Freigabestellung erfolgt und nur bei einem Versuch der Überwindung von Schwergängigkeitsstellen ausgelöste weitere Reversierbewegungen auf die kleine Reversierstrecke s_{Rev} verringert werden. Der Einfachheit halber wird aber das Einklemmschutzsystem vorzugsweise ständig auf die Reversierstrecke s_{Rev} eingestellt, welche kleiner als der vorgegebene Einklemmschutzverzögerungs-Fahrweg s_{EKS-Verzögerung} ist.

Infolge der mechanischen Trägheit des Antriebssystems und der damit verbundenen Vorrichtungsteile nimmt auch nach dem Erkennen einer Einldemmsituation die Klemmkraft noch zu, bis die bewegten Teile zum Stillstand gekommen sind beziehungsweise die Reversierbewegung einsetzt. Insbesondere bei einem Klemmen von harten Körperteilen oder Überprüfung mit einem harten Testkörper in einem steifen System, beispielsweise Dachsystem, resultieren daraus hohe Klemmkräfte, die zu Verletzungen und/oder Beschädigungen führen können. Um den Einfluss eines solchen Nachlaufs gering zu halten, hat man bei bekannten Anordnungen die Verfahrgeschwindigkeit beim Schließen in den einklemmgefährdeten Bereichen verringert. Dies bewirkt aber eine erhöhte Schließzeit und erfordert zudem eine aufwändige Drehzahlsteuerung. Um dem zu begegnen, kann erfindungsgemäß in den Kraftübertragungsweg zwischen dem verstellbaren Fahrzeugelement und dem Antriebssystem mindestens ein elastisch verformbares Element eingefügt sein. Auf diese Weise wird die Nachgiebigkeit "d" des Gesamtsystems verringert, und die nachlaufbedingte zusätzliche Kraft dF_{Nachlauf} = ds_{Nachlauf} * d wird minimiert. Damit lassen sich die Vorschriften (FMVSS 118) für die Klemmkräfte ohne weiteres einhalten. Die Reduzierung der Verfahrgeschwindigkeit kann in vielen Fällen entfallen. Infolgedessen können Kosten eingespart werden und kann zugleich die Schließzeit verringert werden.

Es versteht sich, dass dieser Aspekt der Erfindung auf sehr unterschiedliche Weise realisiert werden kann. Beispielsweise kann einfach am Übergang zwischen einem mit dem Antriebssystem in Wirkverbindung stehenden Antriebskabel und einer mit dem verstellbaren Fahrzeugelement in Antriebsverbindung stehenden Verstellmechanik mindestens eine Feder angebracht sein.

Nachstehend sind Ausführungsbeispiele der Erfindung anhand der Zeichnungen näher erläutert. Es zeigt:
- Fig. 1: ein Blockschaltbild einer Verstellvorrichtung für ein Fahrzeugdach mit Klemmschutz,
- Fig. 2: Schemabilder zum Veranschaulichen der Funktionsweise der Verstellvorrichtung gemäß Fig. 1,
- Fig. 3: ein Schemabild für eine bevorzugte weitere Ausgestaltung der Vorrichtung gemäß Fig. 1, und
- Fig.. 4: einen schematischen Teilschnitt der Anordnung nach Fig. 3.

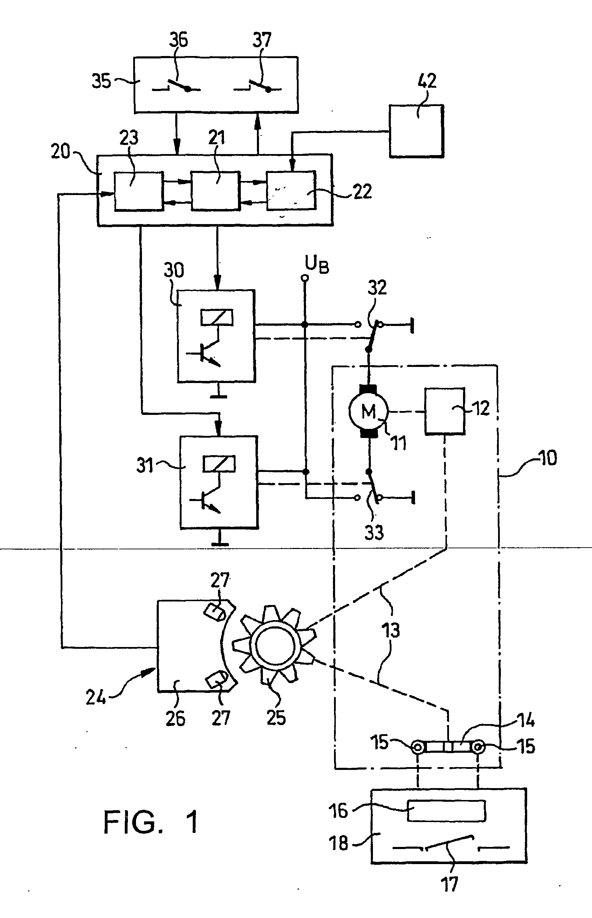

Die Vorrichtung gemäß Fig. 1 weist einen Deckelantrieb 10 mit einem aus dem Bordnetz des Kraftfahrzeuges gespeisten, reversierbaren Elektromotor 11 und einem dem Motor 11 nachgeschalteten Untersetzungsgetriebe 12 auf. Auf einer Abtriebswelle 13 des Untersetzungsgetriebes 12 sitzt ein Antriebsritzel 14. Mit dem Antriebsritzel 14 stehen zwei Antriebskabel 15 in Kämmeingriff, die über eine schematisch bei 16 angedeutete Verstellmechanik mit dem verstellbaren Deckel 17 eines Schiebe/Hebedaches 18 gekoppelt sind. Mittels des Deckels 17 kann eine Dachöffnung 19 wahlweise verschlossen oder mindestens teilweise freigelegt werden.

Zu einer insgesamt mit 20 bezeichneten Steuereinheit gehören insbesondere ein Mikroprozessor 21, ein Einklemmschutzsystem 22 und eine Auswerteeinheit 23. Der Auswerteeinheit 23 gehen Sensorsignale von einem Sensor 24 zum Erfassen von Drehbewegungen der Abtriebswelle 13 zu. Die Auswerteeinheit 23 kann insbesondere einen Positionszähler aufweisen, der die Sensorsignale bei jeder Verstellbewegung des Deckels erfasst. Der Sensor 24 weist beispielsweise ein auf der Abtriebswelle 13 sitzendes Magnetrad 25 und eine Hallsensoreinheit 26 mit zwei Hallgeneratoren 27 auf. Der Motor 11 ist als Gleichstrommotor ausgelegt, und die Polung der Motorspannung lässt sich mittels zweier Relais 30 und 31 umkehren, um so die Drehrichtung des Motors zu reversieren. Für diesen Zweck weisen die Relais 30, 31 jeweils einen im Speisestromkreis des Motors 11 liegenden Relaiskontakt 32 beziehungsweise 33 auf. Die Relais 30, 31 werden von der Steuereinheit 20 angesteuert, die ihrerseits unter dem Einfluss einer Bedieneinheit 35 steht. Die Bedieneinheit 35 weist schematisch dargestellte Bedienelemente 36 und 37 auf, bei deren Betätigung der Motor 11 zum Lauf in der einen beziehungsweise der anderen Drehrichtung (vorwärts/rückwärts) veranlasst wird.

Befindet sich beispielsweise der Deckel 17 in der Schließstellung und wird das Bedienelement 36 (vorwärts) betätigt, lässt die Steuereinheit 20 das Relais 30 anziehen, während das Relais 31 abgefallen bleibt. Der Relaiskontakt 32 schaltet um. Strom fließt von einem Pol U_{B} des Bordnetzes, den Kontakt 32 durch den Motor 11 in der einen Richtung und über den Relaiskontakt 33 nach Masse. Über die Antriebskabel 15 und die Verstellmechanik 16 wird der Deckel 17 zu einer Austellbewegung in die in Fig. 1 skizzierte ausgestellte Lage veranlasst.

Wird ausgehend von der Deckelstellung gemäß Fig. 1 das Bedienelement 37 (rückwärts) betätigt, wird bei abgefallenem Relais 30 das Relais 31 zum Anziehen gebracht. Strom fließt von dem Pol U_{B} des Bordnetzes, den Relaiskontakt 33 durch den Motor 11 in der anderen Richtung und über den Relaiskontakt 32 nach Masse. Der Deckel 17 wird abgesenkt. Weil dabei die Gefahr eines Einklemmens von Fingern oder dergleichen zwischen der Hinterkante des Deckels und der Hinterkante der Dachöffnung 19 besteht, aktiviert der Mikroprozessor 21 das Einklemmschutzsystem 22. Das Einklemmschutzsystem 22 ist mit einem Einklemmsensor 42 verbunden, der signalisiert, wenn es zu einem Einklemmen kommt oder ein Einklemmen droht. Der Einklemmsensor 42 kann in beliebiger bekannter Weise aufgebaut und angeordnet sein. Beispielsweise kann es sich dabei um einen Kraftsensor zum Ermitteln einer einen vorgegebenen Wert übersteigenden Kraft auf die Deckekänder, einen Stromsensor zum Erfassen eines für einen Einklemmfall typischen Anstieges des Motorstromes oder einen Verzögerungssensor zum Ermitteln einer ein Einklemmen anzeigenden Abbremsung der Deckelverstellbewegung oder dergleichen handeln.

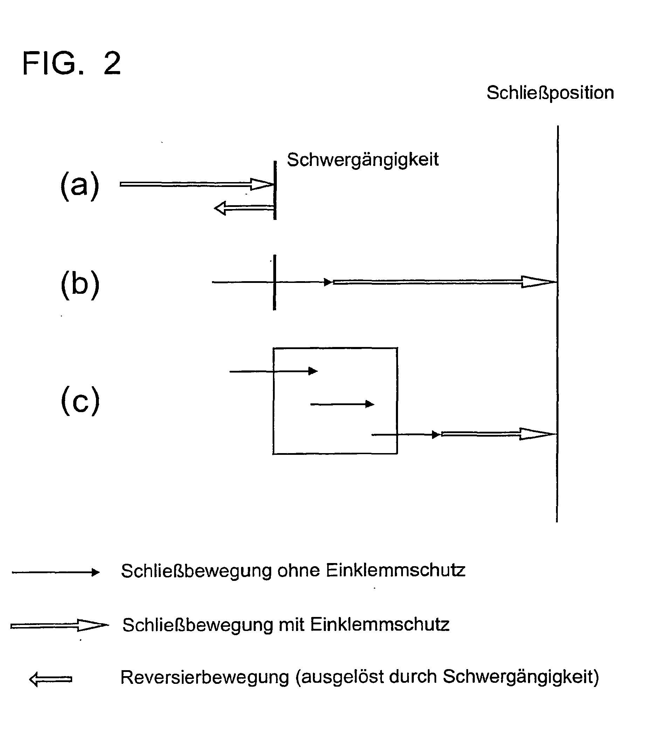

Fig. 2a zeigt schematisch eine Bewegung des Deckels 17 bei aktiviertem Einklemmschutz in Richtung auf eine Schließposition. Bevor die Schließposition erreicht wird, tritt im veranschaulichten Beispiel eine Schwergängigkeit auf. Das Einklemmschutzsystem 22 spricht darauf an, und es bewirkt im Falle der gezeigten Ausführungsform ein Reversieren um eine kleine Reversierstrecke s_{Rev}. Wird jetzt das Bedienelement 37 erneut betätigt, bewirkt, wie in Fig. 2b skizziert, die Steuereinheit 20 eine von der Reversierposition ausgehende Schließbewegung ohne Einklemmschutz um den vorgegebenen Einklemmschutzverzögerungs-Fahrweg s_{EKS-Verzögerung}. Dabei ist in Fig. 2b angenommen, dass diese Schließbewegung ohne Einklemmschutz zum Überwinden der Schwergängigkeitsstelle ausreicht. Nach Durchlaufen des Einklemmschutzverzögerungs-Fahrweges wird der Einklemmschutz wieder selbsttätig aktiviert. Das verstellbare Fahrzeugelement, in diesem Fall in Form des Deckels 17, läuft weiter in die Schließposition und wird dort stillgesetzt.

Fig. 2c zeigt die Arbeitsabfolge im Falle einer ausgedehnten Schwergängigkeit. Dabei ist für den Notschließvorgang ein wiederholtes Betätigen des Bedienelementes 37 notwendig, weil nach einer ersten, der Fig. 2b entsprechenden Schließbewegung ohne Einklemmschutz über den Einklemmschutzverzögerungs-Fahrweg s_{EKS-Verzögerung} das verstellbare Fahrzeugelement noch immer im Schwergängigkeitsbereich steht. Nach einer kurzen Phase mit Einklemmschutz, die in Fig. 2c der Übersichtlichkeit halber nicht eingezeichnet ist, spricht das Einklemmschutzsystem 22 erneut auf die Schwergängigkeit an. Es erfolgt ein weiteres Reversieren um die Reversierstrecke s_{Rev}, die aber kleiner als der Einklemmschutzverzögerungs-Fahrweg ist. Ein erneutes Betätigen des Bedienelementes 37 führt bei dem in Fig. 2c skizzierten Fall schließlich aus dem Schwergängigkeitsbereich heraus.

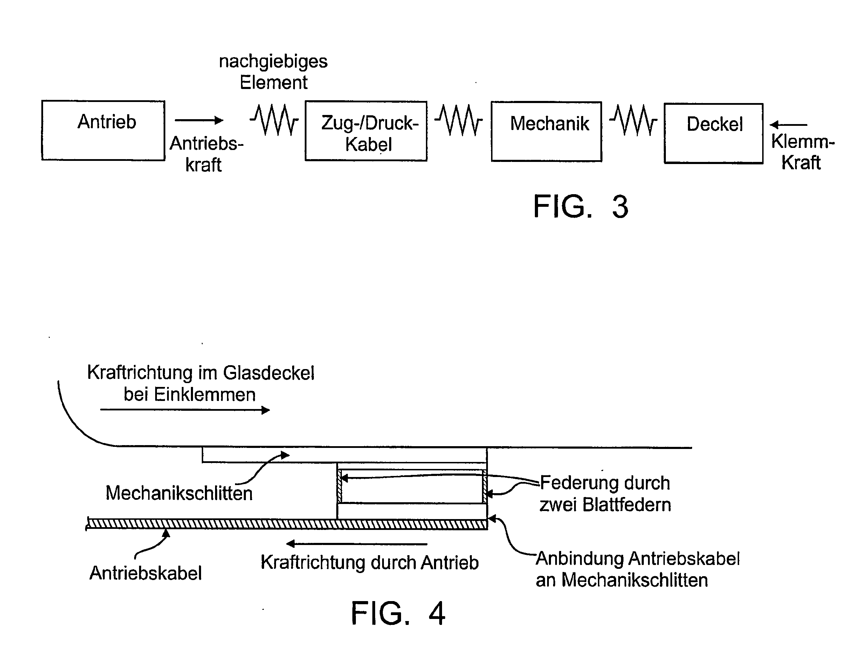

Um unerwünscht hohe Klemmkräfte zu vermeiden, die durch die mechanische Trägheit bewegter Vorrichtungsteile verursacht werden könnten, ist gemäß Fig. 3 ein in der Zeichnung als Feder angedeutetes nachgiebiges Element an beliebiger passender Stelle zwischen dem Antrieb (in Fig. 1 Motor 11 mit Untersetzungsgetriebe 12) und dem Zug-/Druck-Kabel (Antriebskabel 15 in Fig. 1), zwischen dem Zug-/Druck-Kabel und der Mechanik (Verstellmechanik 16 in Fig. 1) und/oder dem zwischen der Mechanik und dem verstellbaren Fahrzeugelement (Deckel 17 in Fig. 1) eingefügt.

Fig. 4 zeigt ein entsprechendes Ausführungsbeispiel. Dabei sind zur Federung zwei Blattfedern zwischen dem Antriebskabel und einem mit dem Deckel, beispielsweise einem Glasdeckel, gekoppelten Mechanikschlitten im Bereich der Anbindung des Antriebskabels an den Mechanikschlitten angeordnet.

### Bezugszeichenliste

- 10: Deckelantrieb
- 11: Elektromotor
- 12: Untersetzungsgetriebe
- 13: Abtriebswelle
- 14: Antriebsritzel
- 15: Antriebskabel
- 16: Verstellmechanik
- 17: Deckel
- 18: Schiebe/Hebedach
- 19: Dachöffnung
- 20: Steuereinheit
- 21: Mikroprozessor
- 22: Einklemmschutzsystem
- 23: Auswerteeinheit
- 24: Sensor
- 25: Magnetrad
- 26: Hallsensoreinheit
- 27: Hallgenerator
- 30, 31: Relais
- 32, 33: Relaiskontakt
- 35: Bedieneinheit
- 36, 37: Bedienelement
- 42: Einklemmsensor

## Patentansprüche

1. Verfahren zum Schließen einer einklemmüberwachten Fahrzeugöffnung (17) mittels eines Fahrzeugelements (16), das von einem Antriebssystem (10) angetrieben wird, das mit einem Einklemmschutzsystem (22) in Wirkverbindung steht, welches im Einklemmfall mit einem Reversieren des Fahrzeugelements in Öffnungsrichtung reagiert, **dadurch gekennzeichnet, dass** bei einer Schließbewegung des Fahrzeugelements das Einklemmschutzsystem mindestens nach einem vorausgegangenen Reversieren derart verzögert eingeschaltet wird, dass ein Schließvorgang über einen vorgegebenen Einklemmschutzverzögerungs-Fahrweg (S_{EKS-Verzögerung}) des Fahrzeugelements hinweg ohne Einklemmschutz erfolgt.

2. Verfahren nach Anspruch 1, **dadurch gekennzeichnet, dass** das Einklemmschutzsystem normalerweise unverzögert wirksam gemacht wird und ein verzögertes Einschalten des Einklemmschutzsystems nur nach vorausgegangenem Reversieren des Fahrzeugelements erfolgt.

3. Verfahren nach Anspruch 1 oder 2, **dadurch gekennzeichnet, dass** mindestens nach einem vorausgegangenen Ansprechen des Einklemmschutzsystems und dadurch ausgelöster Reversierbewegung des Fahrzeugelements in eine festgelegte Freigabeposition oder um eine festgelegte Reversierstrecke bei erneutem Aktivieren des Antriebssystems in Schließrichtung die von dem Einklemmschutzsystem bestimmte Reversierbewegung auf eine vorgegebene Reversierstrecke (s_{Rev}) eingestellt wird, die kleiner als der vorgegebene Einklemmschutzverzögerungs-Fahrweg (s_{EKS-Verzögerung}) ist.

4. Verfahren nach Anspruch 3, **dadurch gekennzeichnet, dass** das Einklemmschutzsystem ständig auf die Reversierstrecke s_{Rev} eingestellt wird, welche kleiner als der vorgegebene Einklemmschutzverzögerungs-Fahrweg (s_{EKS-Verzögerung}) ist.

5. Vorrichtung zum Schließen einer einklemmüberwachten Fahrzeugöffnung (17) mittels eines Fahrzeugelements (16), mit einem das Fahrzeugelement antreibenden Antriebssystem (10) und einem damit in Wirkverbindung stehenden Einklemmschutzsystem (22), das im Einklemmfall mit einem Reversieren des Fahrzeugelements in Öffnungsrichtung reagiert, **gekennzeichnet durch** eine Steuerung, die bei einer Schließbewegung des Fahrzeugelements das Einklemmschutzsystem (22) mindestens nach einem vorausgegangenen Reversieren derart verzögert einschaltet, dass ein Schließvorgang über einen vorgegebenen Einklemmschutzverzögerung-Fahrweg (s_{EKS-Verzögerung}) des Fahrzeugelements hinweg ohne Einklemmschutz erfolgt.

6. Vorrichtung nach Anspruch 5, **dadurch gekennzeichnet, dass** das Einklemmschutzsystem normalerweise unverzögert wirksam ist und ein verzögertes Einschalten des Einklemmschutzsystems nur nach vorausgegangenem Reversieren des Fahrzeugelements erfolgt.

7. Vorrichtung nach Anspruch 5 oder 6, **dadurch gekennzeichnet, dass** die Steuerung mindestens nach einem vorausgegangenen Ansprechen des Einklemmschutzsystems und dadurch ausgelöster Reversierbewegung des Fahrzeugelements in eine festgelegte Freigabeposition oder um eine festgelegte Reversierstrecke bei erneutem Aktivieren des Antriebssystems in Schließrichtung die von dem Einklemmschutzsystem bestimmte Reversierbewegung auf eine vorgegebene Reversierstrecke (s_{Rev}) einstellt, die kleiner als der vorgegebene Einklemmschutzverzögerungs-Fahrweg (s_{EKS-Verzögerung}) ist.

8. Vorrichtung nach Anspruch 7, **dadurch gekennzeichnet, dass** das Einklemmschutzsystem ständig auf die Reversierstrecke (s_{Rev}) eingestellt ist, welche kleiner als der vorgegebene Einklemmschutzverzögerungs-Fahrweg (s_{EKs-Verzögerung}) ist.

9. Vorrichtung nach einem der Ansprüche 5 bis 8, **dadurch gekennzeichnet, dass** in den Kraftübertragungsweg zwischen dem verstellbaren Fahrzeugelement und dem Antriebssystem mindestens ein elastisch verformbares Element eingefügt ist.

10. Vorrichtung nach Anspruch 9, **dadurch gekennzeichnet, dass** am Übergang zwischen einem mit dem Antriebssystem in Wirkverbindung stehenden Antriebskabel und einer mit dem verstellbaren Fahrzeugelement in Antriebsverbindung stehenden Verstellmechanik mindestens eine Feder angebracht ist.

## Claims

1. Method for closing a vehicle opening (17) with pinch-protection monitoring, by means of a vehicle element (16) which is driven by a drive system (10) which is operatively connected to a pinch protection system (22) which, in the event of pinching reacts by reversing the vehicle element in the opening direction **characterized in that** during a closing movement of the vehicle element the pinch protection system is switched on with a delay, at least after preceding reversal, in such a way that a closing process takes place over a predefined pinch protection delay travel (S_{EKS delay}) of the vehicle element without pinch protection.

2. Method according to Claim 1, **characterized in that** the pinch protection system is normally activated without delay and delayed switching on of the pinch protection system takes place only after preceding reversal of the vehicle element.

3. Method according to Claim 1 or 2, **characterized in that** at least after the pinch protection system has previously responded and after a reversing movement of the vehicle element, triggered as a result thereof, into a defined release position or by a defined reversing distance when the drive system is activated again in the closing direction, the reversing movement which is determined by the pinch protection system is set to a predefined reversing distance (S_{Rev}) which is shorter than the predefined pinch protection delay travel (S_{EKS delay})

4. Method according to Claim 3, **characterized in that** the pinch protection system is continuously set to the reversing distance (S_{Rev}) which is shorter than the predefined pinch protection delay travel (S_{EKS delay}).

5. Device for closing a vehicle opening (17) with pinch-protection monitoring, by means of a vehicle element (16) having a drive system (10) which drives the vehicle element and a pinch protection system (22) which is operatively connected thereto and in the event of pinching reacts by reversing the vehicle element in the opening direction, **characterized by** a controller which, during a closing movement of the vehicle element, switches on the pinch protection system (22), at least after a preceding reversal, with a delay such that a closing process takes place over a predefined pinch protection delay travel (S_{EKS delay}) of the vehicle element without pinch protection.

6. Device according to Claim 5, **characterized in that** the pinch protection system is normally active without a delay and delayed switching on of the pinch protection system takes place only after preceding reversal of the vehicle element.

7. Device according to Claim 5 or 6, **characterized in that** at least after the pinch protection system has previously responded and after a reversing movement of the vehicle element, triggered as a result thereof, into a defined release position or by a defined reversing distance when the drive system is activated again in the closing direction, the reversing movement which is determined by the pinch protection system is set to a predefined reversing distance (S_{Rev}) which is shorter than the predefined pinch protection delay travel (S_{EKS delay}).

8. Device according to Claim 7, **characterized in that** the pinch protection system is continuously set to the reversing distance (S_{Rev}) which is shorter than the predefined pinch protection delay travel (S_{EKS delay}).

9. Device according to one of Claims 5 to 8, **characterized in that** at least one elastically deformable element is inserted into the force transmission path between the adjustable vehicle element and the drive system.

10. Device according to Claim 9, **characterized in that** at least one spring is mounted at the transition between a drive cable, operatively connected to the drive system, and an adjustment mechanism, having a drive connection to the adjustable vehicle element.

## Revendications

1. Procédé de fermeture d'ouverture de véhicule (17) à contrôle antipincement à l'aide d' un élément de véhicule (16) entraîné par un système d'entraînement (10) en liaison active avec un système de protection antipincement (22) réagissant en cas de pincement par une inversion de l'élément de véhicule dans la direction d'ouverture, **caractérisé en ce qu'**en cas de mouvement de fermeture de l'élément de véhicule, le système de protection antipincement est connecté de façon temporisée au moins après une inversion précédente de telle sorte qu'un processus de fermeture se produit sur une trajectoire de temporisation antipincement (S_{EKS-Verzögerung}) prédéfinie de l'élément de véhicule sans protection antipincement.

2. Procédé selon la revendication 1, **caractérisé en ce que** le système de protection antipincement est normalement active sans temporisation et qu'une connexion temporisée du système de protection antipincement ne se produit qu'après une inversion précédente de l'élément de véhicule.

3. Procédé selon la revendication 1 ou 2, **caractérisé en ce que** le mouvement d'inversion déterminé par le système de protection antipincement est réglé sur un tronçon d'inversion (S_{Rev}) prédéfini inférieur à la trajectoire de temporisation antipincement (S_{EKS-Verzögerung}) prédéfinie au moins après une réponse précédente du système de protection antipincement et après le mouvement d'inversion ainsi déclenché de l'élément de véhicule dans une position de déclenchement déterminée ou autour d' un tronçon d'inversion déterminé en cas de nouvelle activation du système d'entraînement dans la direction de fermeture.

4. Procédé selon la revendication 3, **caractérisé en ce que** le système de protection antipincement est réglé en permanence sur le tronçon d'inversion s_{Rev} inférieur à la trajectoire de temporisation de protection antipincement (S_{EKS-Verzögerung}) prédéfinie.

5. Dispositif de fermeture d'ouverture de véhicule (17) à contrôle antipincement à l'aide d' un élément de véhicule (16), avec un système d'entraînement (10) entraînant l'élément de véhicule et avec un système de protection antipincement (22) en liaison active avec lui réagissant en cas de pincement par une inversion de l'élément de véhicule dans la direction d'ouverture, **caractérisé par** la présence d'un élément de commande connectant le système de protection antipincement (22) en cas de mouvement de fermeture de l'élément de véhicule au moins après une inversion précédente de telle sorte qu'un processus de fermeture se produit sur une trajectoire de temporisation antipincement (S_{EKS-Verzögerung}) prédéfinie de l'élément de véhicule sans protection antipincement.

6. Dispositif selon la revendication 5, **caractérisé en ce que** le système de protection antipincement est normalement activé sans temporisation et qu'une connexion temporisée du système de protection antipincement ne se produit qu'après une inversion précédente de l'élément de véhicule.

7. Dispositif selon la revendication 5 ou 6, **caractérisé en ce que** l'élément de commande règle le mouvement d'inversion déterminé par le système de protection antipincement sur un tronçon d'inversion (S_{Rev}) prédéfini inférieur à la trajectoire de temporisation antipincement (S_{EKS-Verzögerung}) prédéfinie au moins après une réponse précédente du système de protection antipincement et après le mouvement d'inversion ainsi déclenché de l'élément de véhicule dans une position de déclenchement déterminée ou autour d'un tronçon d'inversion déterminé en cas de nouvelle activation du système d'entraînement dans la direction de fermeture.

8. Dispositif selon la revendication 7, **caractérisé en ce que** le système de protection antipincement est réglé en permanence sur le tronçon d' inversion (S_{Rev}) inférieur à la trajectoire de temporisation de protection antipincement (S_{EKS-Verzögerung}) prédéfinie.

9. Dispositif selon l'une quelconque des revendications 5 à 8, **caractérisé en ce que** lors de la course de transmission de force, au moins un élément déformable de façon élastique est inséré entre l'élément de véhicule mobile et le système d'entraînement.

10. Dispositif selon la revendication 9, **caractérisé en ce qu'**au moins un ressort est disposé, au niveau de la transition, entre un câble d'entraînement en liaison active avec le système d'entraînement et un mécanisme de déplacement en liaison d'entraînement avec l'élément de véhicule mobile.
